# EUROPEAN PATENT APPLICATION

(11) **EP 3 498 094 A1**
(43) Date of publication of application: **19.06.2019**
(21) Application number: 18213109.4
(22) Date of filing: 17.12.2018
(51) Int. Cl.: A01K 97/00, A01K 97/12

(54) **REMOTE CONTROLLER FOR A FISHING APPLIANCE**

(30) Priority: 18.12.2017 GB 201721169
(71) Applicant: Wolf Holdings Ltd., London WC2H 9JQ (GB)
(72) Inventor: Fox, Clifford Royston, Upminster, RM14 1TP (GB); Fox, Richard Royston, Essex, CM14 4HA (GB); Coombes, Neil John, Essex, RM5 2UL (GB)
(74) Representative: Brunner, John Michael Owen

(57) **Abstract**

A remote control (100) for communicating with at least one electronic fishing appliance (200), the remote control comprising a wireless transceiver (10) adapted to communicate bi-directionally with the at least one electronic fishing appliance; a user interface (20); a control element (30) adapted to transmit via the wireless transceiver at least one control signal to the at least one electronic fishing appliance for controlling its operation in response to a user interacting with the user interface; and a notification element (40) adapted to receive via the wireless transceiver a status signal from the at least one electronic fishing appliance, the status signal being indicative of an operating status of the electronic fishing appliance, and the notification element being further adapted to alert a user of the status.

## Description

### Field of the Disclosure

The present invention relates to a remote control for at least one electronic fishing appliance. More particularly, the invention relates to a remote control for controlling a variety of different fishing appliances.

### Background

Various types of electronic fishing appliances have been developed for assisting anglers whilst fishing. These appliances come in various forms and serve a wide variety of functions. One example is an electronic bite detector for indicating line motion resulting from a fish bite on a fishing line. Such electronic bite detectors are popular and it is now common for an angler to deploy multiple bite detectors when fishing.

Notification devices have been developed to make it more convenient for anglers to work with multiple bite detectors. Known notification devices merely serve to alert the user to a bite detected on one of the multiple bite detector. The notification device is a passive device i.e. it only receives a bite signal from the bite detector to alert the angler. By using such a notification device, an angler need only monitor the notification device as opposed to monitoring multiple bite detectors.

Angling takes places in an outdoor environment and often in inclement weather conditions. A user's hands may be gloved and possibly wet or cold. Additionally, moving components such as buttons can serve to facilitate the entry of moisture, which ultimately damages sensitive electronic components. For this reason, user interfaces on electronic fishing appliances are kept as simple as possible.

Angling also occurs over a relatively long time scale and often occurs in remote locations. Multiple hours angling returning to the same location for several days using the same electronic fishing appliances is common. It is unlikely that an electricity supply is nearby. Therefore, there is a risk that electronic fishing appliances will run out of power. This is especially problematic as storage of spare batteries is difficult in damp conditions.

At least for these reasons, electronic fishing appliances, including notification devices, avoid complex functionality and complex user interfaces, and have limited functionality to help reduce power consumption.

Despite the above issues, the presence of multiple electronic fishing appliances requires the configuration of multiple operational parameters. Ensuring that all of the operational parameters of the electronic fishing appliances are configured so that the electronic fishing appliances perform optimally is challenging, especially as the number of electronic fishing appliances increases.

Even with simple user interfaces, configuring a large number of electronic fishing appliances, takes significant time. Again, given the outdoor environment, and possibly inclement weather conditions, this configuring process can be challenging and unpleasant for the user and other nearby persons by way of the noise and movement the configuring process entails.

### Summary of the Disclosure

The present invention is defined by the claims with further optional features defined by the dependent claims.

According to a first aspect of the invention, there is provided a remote control for communicating with at least one electronic fishing appliance, the remote control comprising a wireless transceiver adapted to communicate bi-directionally with the at least one electronic fishing appliance, a user interface, a control element adapted to transmit via the wireless transceiver at least one control signal to the at least one electronic fishing appliance for controlling its operation in response to a user interacting with the user interface, and a notification element adapted to receive via the wireless transceiver a status signal from the at least one electronic fishing appliance, the status signal being indicative of an operating status of the electronic fishing appliance, and the notification element being further adapted to alert a user of the status.

Regardless of the accessibility of the at least one electronic fishing appliance, the remote control therefore allows the user of the control to conveniently control the at least one electronic fishing appliance and to receive status signals from it. This may also simplify operation as the user does not need to know the control signal that is issued. Thus, a device with many operational parameters can be controlled by a simple interface on the remote controller. This is especially advantageous if a user interface of the at least one electronic fishing appliance is damaged or the user does not know how to configure the at least one electronic fishing appliance.

Optionally, the at least one electronic fishing appliance may comprise a bite detector, and the status may be a bite detected on a bite detector. A bite detector by its nature is likely to be used near water or mud, and therefore remote control of the bite detector is especially useful. Such control also decreases the risk of alerting nearby fish to the presence of the user. The remote control may also display a status relating to the particulars of the detected bite such as which sensor of the bite detector detected the bite and/or the magnitude and/or direction of the detected bite.

The at least one electronic fishing appliance may comprise two bite detectors and the notification system include an indication as to which bite detector detected the bite. This enables the user to be directed quickly to the correct bite detector.

Optionally, the remote control is configured to adjust at least one of the following bite detector operational parameters: state of emitted light, intensity of notification, notification method by which a bite is signalled, sensitivity, operational mode, and any other parameter that is adjustable by a user of the bite detector.

Operational modes may specific a plurality of specific operational parameters, thereby facilitating easy set-up. Optionally, all parameters of all connected electronic fishing appliances may be controlled by the remote control.

The at least one electronic fishing appliance comprises a first electronic fishing appliance and a second electronic fishing appliance. The first electronic fishing appliance may be of different type to the second electronic fishing appliance. The remote control may not need any configuration to deal with differing connected electronic fishing appliances. The user does not therefore need to waste time working out which electronic fishing appliances are of the same type when forming a fishing system that uses multiple electronic fishing appliances.

The first electronic fishing appliance may have different operational parameters to the second electronic fishing appliance. Therefore, the remote controller enables convenient and simple configuration of two electronic fishing appliance even if they have a different set of controls.

The remote control may be configured to receive data from all electronic fishing appliances that transmit data that are connected to the remote control. This ensures the user does have to go to and view each electronic fishing appliance, which is more convenient for the user. Of course, only some of the data may be used depending on the configuration of the remote control and desires of the user.

Optionally, the remote control is configured to put at least one electronic fishing appliance in an alarm mode when a user selects alarm mode. Thereby the at least one electronic fishing appliances and remote control, and possibly the fishing locations, are protected from unauthorized access. The remote control may be configured to put all connected electronic fishing appliances that have an alarm mode in to an alarm mode when a user selects an alarm mode.

Optionally, the remote control and any connected electronic fishing appliance in an alarm mode form a security system for detecting at least one unauthorized event. The user may select the alarm mode on the remote or, optionally, on at least one electronic fishing appliance. Once selected, the alarm mode may require a code to exit. Such a security system affords protection against would be thieves and intruders and is advantageous as it is not a separate and apparent security system that is easily avoided.

The security system may detect an unauthorized event, all connected electronic fishing appliances are sent an alert signal. This prevents the alert signal being blocked by someone compromising a particular connected electronic fishing appliance.

Optionally, the alert signal sets at least one electronic fishing appliance into an alert mode.

This prevents the alarm being silenced by someone compromising or destroying the remote control.

Optionally, the remote control is configured to harmonize an operational parameter of all connected electronic fishing appliances that have a relevant adjustable operational parameter. This ensures easy set-up of all connected electronic fishing appliance and can ensure uniformity of response across the connected devices. It also helps prevents accidental misconfiguration, such as leaving a distant bite detector in a silent state. This also ensures convenient identifying of connected electronic fishing appliances. For example, all connected bite detectors might be set to emit a blue colour to distinguish from other similar bite detectors. Of course, is some configurations, only a subset of connected electronic fishing appliances that have a relevant adjustable operational parameters need be configured. For example, the user may wish to lock a particular area whilst checking fishing lines in another area. The sound emitted by the devices is one example of a parameter that may be harmonized in all or in a subset of devices. This is advantageous in helping a user identity which subset of devices is emitted a sound, which may assist in appropriately directing the user.

Optionally, the remote control is configured to put at least one electronic fishing appliance in to a low volume state when a user selects a low volume mode. Optionally, the remote control is configured to put all connected electronic fishing appliances that have a low volume mode in to a low volume mode when a user selects to a low volume mode. Optionally, the low volume mode is a silent mode. This feature is preferable to having to go around and turn the volume down on several electronic fishing appliance, especially if they are emitting a loud noise or it is not clear which electronic fishing appliance is making noise.

Optionally the at least one electronic fishing appliance comprises at least one item from the list of: a bite detector, a PIR detector, a light such as a bivvy light, a battery pack, a float, a weighing scale, a thermometer, and any electronic fishing appliance configured to communicate with the remote control. The PIR detector is especially advantageous when forming a security system.

In some cases, the at least one electronic fishing appliance includes at least one light and at least one bite detector. This enables the user to be efficiently alerted by a light when a bite is detected. Silent bite detection is thereby enabled. The state of the emitted light can also serve to direct the user as necessary to the appropriate electronic fishing appliance.

The at least one electronic fishing appliance may comprise another remote control.

Optionally, the remote control is configured to relay communications from another remote control. This enables the range of the main remote control, which is the remote control operated by the user, to be improved; and for the reliability of communications to be improved.

Optionally, the another remote control comprises the features of the remote control. Optionally, the remote control is configured to form a communication network. The formation of this network avoids the remote control having to rely on existing networks. This is especially advantageous if the remote control is used in an area lacking reliable connections to existing networks.

Optionally, forming a communication network comprises attempting to communicate with a number of electronic fishing appliances. This mode of operation ensures that the system does not have to continuously scan for further electronic fishing appliances once they are connected thereby saving power.

Optionally, forming a communication network comprises linking with electronic fishing appliances as they appear within a range of the remote control. This mode of operation simplifies use as the user can simply add electronic fishing appliances as required. The remote control may also only identify previously paired electronic fishing appliances.

Optionally, forming a communication network comprises linking with electronic fishing appliances using a pairing procedure. This mode of option ensures that the system only scans for electronic fishing appliances once they are paired thereby saving power. Additionally, it prevents accidental pairing to nearby unused electronic fishing appliances.

Optionally, forming a communication network comprises ascertaining the number of electronic fishing appliances that are within a range of the remote control. This may include ascertaining the number of paired electronic fishing appliances.

Optionally, forming a communication network comprises repeatedly attempting to communicate with a number of electronic fishing appliances. This mode of operation simplifies use as the user can add electronic fishing appliances as required and the system will reconfigure the network as necessary.

Optionally, forming a communication network comprises unlinking any electronic fishing appliance that leaves the network. This mode of operation simplifies use as the user can simply remove electronic fishing appliances as required without the network needing to be reconfigured. Optionally, maintaining a communication network comprises unlinking any electronic fishing appliance using an unpaired procedure. Thereby accidental or unnecessary connections with nearby electronic fishing appliances that are not deployed can be avoided.

Optionally, the remote control has several communication channels. Optionally, each communication channel is associated with one electronic fishing appliance. This ensures that communications from different electronic fishing appliances are treated independently.

The remote control may be configured to enable calling or messaging of one or more other remote controls. This enables the user to communicate with other users in areas that may not have reliable signal for standard communication devices.

Optionally, at least some of the communications on the network are encrypted. This improves security of the network, including protecting against third parties listening to the wireless signals between the electronic fishing appliances or injected false signals. Encryption also ensures that the network security is not jeopardized by the addition of insecure third party devices.

Optionally, the remote control comprises an alpha numeric display. This ensures received status messages and/or the operational parameters of the remote control can be displayed in a harmonized way. The remote control may prioritize the displayed information, and may change the displayed information to show different information at different times.

Optionally, the remote control comprises a torch. This is convenient for the user in low light conditions as the remote controller is generally kept near or on the user.

The remote control may be configured to be at least one of sealed, buoyant, and self-uprighting when floating in water. This construction helps mitigate against damage should the remote control be dropped into mud or water.

Optionally, the remote control comprises a body comprising molded cells. This provides protection without adding weight or substantial manufacturing cost to the remote controller.

Optionally, the molded cells define nested compartments. This affords increased protection by defining a series of inner compartments.

The cells may cooperate to prevent ingress of water or detritus into body. Thus preventing damage to the sensitive electronics inside.

In some cases, the user interface comprises a push button. This enables easy operation in wet or difficult conditions.

Optionally, the notification system is configured to display a status by emitting a light, generating a noise, or vibrating. Optionally, the notification system is configured to display a status of multiple electronic fishing appliance in communication with the remote control. This ensures received status messages can be displayed in a harmonized way. The remote control may prioritize the displayed information, and may change display to show different information at different times.

Optionally, the notification system illumination is automatically adjusted according to the local environment or current time. This reduces the strain on the eye of a user looking at the notification system and prevents the illumination dazzling the user, or being too dim to be read.

The remote control may comprise a contoured body and a whip aerial that conform to the contours of the body. The whip aerial serves to extend the range of the communication remote control but must be of a certain length to operate. Conforming the whip aerial to the contours of the body ensures that the contoured body, which may form at least part of the outer cover of the bite detector, does not have to be extended or enlarged to accommodate the whip aerial. The contoured body may also be shaped, such as by having a grove, to more securely hold the whip aerial in place.

The remote control may be configured to communicate with at least one ancillary fishing accessory that is coupled to one of the at least one electronic fishing appliance through a port. The remote control may be configured to communicate with at least one ancillary fishing accessory that is coupled to the remote control through a port. This enables electronic fishing appliances that cannot directly wirelessly connect to the remote controller, termed herein pluggable devices, to communicate with the remote controller. Thereby, extending the range of the type of fishing accessory that can be connected, and enabling very simple devices to be connected.

Optionally, the remote control is configured to control the at least one ancillary fishing accessory via the port. This allows pluggable devices to be centrally controlled.

The remote control may be configured to acquire data from the at least one ancillary fishing accessory via the port. This allows the user to centrally monitor, via the remote control, pluggable devices.

Optionally, the port comprises a physical coupling. This means the pluggable device does need not be fitted with the electronics to enable wireless connections.

The physical coupling may comprise two electrical connections. Optionally, the physical coupling comprises four electrical connections. Optionally, the physical coupling comprises connections to two communication channels. Therefore, connected ancillary fishing accessories can be efficiently controlled and interrogated. Optionally, the physical coupling is a 2.5 mm or 3.5 mm jack. Such plugs are standard in the field and therefore enable third party devices or existing devices to be easily connected.

Optionally the port is configured to recognize an ancillary fishing accessory that is connected. This ensures that the appropriate voltages are read or supplied to the recognized connected ancillary fishing accessory.

Optionally, the port is configured to send appropriate control signals to a recognized connected ancillary fishing accessory. This ensures the control signals do not damage the ancillary fishing accessory.

Optionally, the remote control is configured to connect to an existing network, which may be an existing mobile telephone network. The remote control may be configured to enable data transfer and voice and text messaging over the existing mobile telephone network. The enables the remote control to communicate beyond the network it establishes. Additionally, the remote control can retrieve further useful information such as weather updates and respond appropriately either automatically or by alerting the user.

A computer-readable medium, comprising executable instructions, for installation on a portable computer, such as a mobile phone, for controlling the remote control. Using a mobile phone to control the remote control means that the remote control need not by carried at all times by the user. This is further advantageous if the remote control user interface is damaged or the manufacturer wants to update the user interface or add additional functionality.

In a second aspect of the invention there is an electronic fishing appliance configured to operate with the remote control. The electronic fishing appliance may be at least one of: a bite detector, a PIR detector, a light, a battery pack, a float, a thermometer, and a weighing scale configured to communicate with the remote control.

In a third aspect of the invention, there is an ancillary fishing accessory configured to communicate via the port.

In a fourth aspect of the invention, there is a kit comprising the remote control of and at least one electronic fishing appliance.

### Brief Description of Drawings

The invention is described below by way of example only with reference to the following figures, wherein:
Figure 1 is a block diagram of a remote control, according to the first aspect of the present invention.
Figure 2 is a projection view of the remote control, displaying the front, right, and bottom face.
Figure 3 is a projection view of the remote control, displaying the front, left, and bottom face.
Figure 4 is a front image of the remote control.
Figure 5 is a front view of a section of the remote control, displaying an upper section of the front face.
Figure 6 is a projection view of a bite detector according to the second aspect of the present invention.
Figure 7 is a bottom view of the bite detector.
Figure 8 shows the bite detector of figure 6 with a passive infrared (PIR) sensor connected and an adaptable multicolour fishing hanger connected.
Figure 9 is a block diagram showing the network layout of the remote control and several electronic fishing appliances.
Figure 10 is an image of a kit comprising the remote control, a bivvy light, a wireless PIR sensor, and the bite detector with a wired PIR sensor and multicolour fishing hanger.
Figure 11 provides a flow chart of the procedure to pair a bite detector with a remote control.

Similar features in the figures are referred to by similar reference numerals.

### Detailed Description

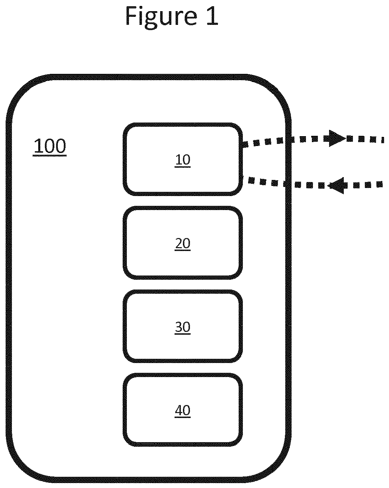

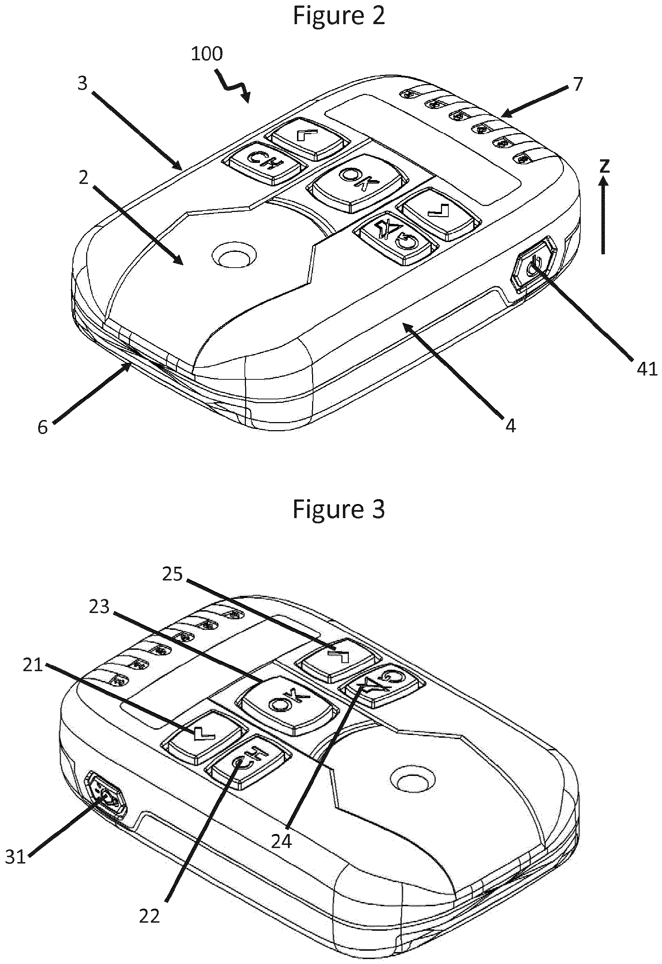

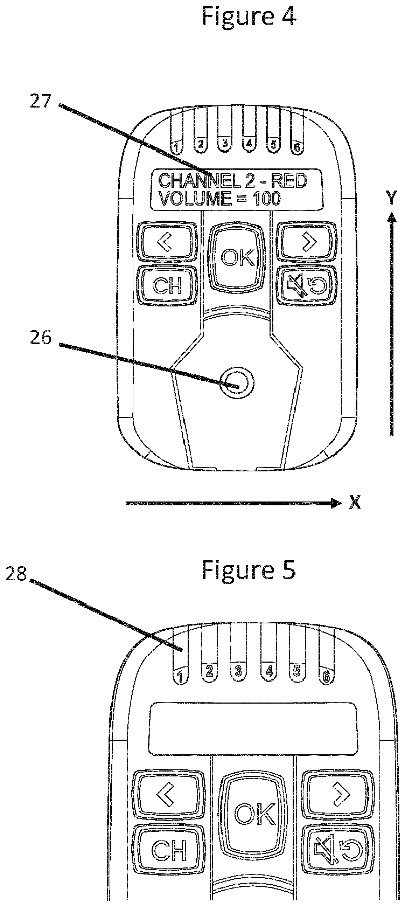

The remote control of the present invention is described by reference to figures 1 to 5. The remote control 100 is a portable battery-powered device with a case that is formed to be conveniently held in an angler's hand. In some cases, the remote control 100 comprises two processors, bespoke firmware, and is powered by AA batteries. The remote control 100 bilaterally communicates with connected electronic fishing appliances 200. The remote control 100 case can be defined by six faces, which are the front face 2, back face 5, left face 3, right face 4, top face 7 and bottom face 6. The case will be described as if it is sitting vertically upstanding resting on its bottom face 6 facing a user (as illustrated in figure 4). The left to right direction is indicated in figure 4 by the arrow marked X. The bottom to top direction is indicated in figure 4 by the arrow marked Y. The front to back direction is orthogonal to the X and Y directions and is indicated in figure 2 by the arrow marked Z.

The width of an object is defined as its length in the X direction, the height of an objection is defined as its location in Y direction, and the depth of an object as its length in the Z direction.

Each face comprises a surface that has been filleted, curved, and/or shaped to improve its ergonomics, and make it easier for a user to hold and use the remote control for long periods of time. The surfaces are generally not distinct but instead transition smoothly between adjacent faces. The front face has five buttons, which are the menu left button 21, the menu right button 25, the ok button 23, the channel selection button 22, and the return button 24.

The remote control 100 is substantially symmetric in the left to right direction about the centre plane with the ok button 23 located just above the centre of the front face 2. To the left of the ok button 23 are the menu left button 21 and the channel selection button 22, the channel selection button 22 being located below the menu left button 21. To the right of the ok button 23 are the menu right button 25 and the return button 24. The return selection button 24 is located below the menu right button 25. The top of the left menu button 21 and right menu button 25 align with the top of the ok button 23.

The left menu button 21, right menu button 25, channel selection button 22 and return button 24 are approximately the same size. The ok button 23 is approximately 75% of the width and approximately 200% of the length of the left menu button 21.

The configuration of the buttons has been designed to enable easy and intuitive use even in low light conditions on when being used with gloves. All buttons on the front face 2 are received in their own separate cavity in the front face 2 and all are profiled as bulging rounded rectangles to produce an ergonomic shape. They are made from any suitable hard wearing material that is convenient to use as a button such a plastic or rubber. The buttons are marked with symbols to let the user know the function of the relevant button. All external features of the remote control 100, including all buttons, are appropriately sealed to prevent the ingress of moisture into the interior of the remote control 100.

In the left right centre, approximately a third of the height from the bottom face 6 to the top face 7 is a speaker 26 for alerting the user. The sound the speaker produces adjusts according to the operational parameters or status of the remote control 100 and the operational parameters or status of connected electronic fishing appliances 200.

Running substantially all of the width of the front face 2 except for a narrow bevel on the left edge and similarly sized narrow bevel of the right edge is an alpha numeric display 27 displaying two lines of characters. This displays various operational parameters or status of the remote control 100 and the operational parameters or status of any electronic fishing appliance that are connected, and which report to the remote control 100, to the remote control 100. The display 27 is located so that the bottom edge is above the top of the menu left button 21, ok button 23, and menu right button 25. The display 27 has a multicolour backlight that can be configured to emit a colour preferred by the user. The colour of the backlight can also be used to indicate a particular status or a detected event.

Along the top of the front face 2, running over the top face 7 and extending down the back face 5 of the remote control 100 are a series of six partially translucent strips 28 that are each configured to be illuminated by multicolour illumination means situated inside the case. The multicolour illuminate means can adapt the state of the light emitted as required. Therefore, since each of the six strips 28 is individually addressable, any desired lighting pattern can be formed. At the end of the strips on the front face is a number. The numbers are arranged consecutively and run from 1 at the base of the left most strip to 6 at the base of the right most strip. As described below, the remote control 100 is configured to communicate over multiple channels. The strip lights 28 therefore normally are used to indicate the relevant channel over which a certain communication is happening. If the function is active, the illumination of the strip lights 28 and all light emitting areas of the remote control 100 can be configured to automatically adjust according to the local environment or current time. The local environment may include ambient light levels, which can be measured using light sensors on the remote control or on any connected electronic fishing appliance.

On the right side of the remote control 100 is a hexagonally shaped power button 41. The power button 41 is located approximately at the same location as the display 27 in the Y direction, and approximately in the middle of the right side 4 in the Z direction. The power button is made of the same material of the buttons on the front face. The power button 41 is received in a cavity in the case.

On the right side of the remote control 100 is a hexagonally shaped torch button 31. The torch button is located approximately at the same height as the display 27 and is also aligned with the height of the power button, and approximately in the middle of the right side in the Z direction.. The torch button is made of the same material of the buttons on the front face. The torch button is received in cavity in the right side. The torch button 31 and the power button 41 are approximately the same size.

The case is formed by bringing together two halves. In some designs, the case is formed of ABS plastic. The two halves are not equal and the half comprising the front face, herein the front half, extends in certain locations to ensure that the cavities in the right and left face, which contain the power button and torch button, are not split by the joint running in-between the two halves. The two halves of the case comprise molded cells which cooperate to prevent ingress of water or detritus into the body. The cells also increase structural rigidity and made the remote control 100 more buoyant.

The case and all buttons and features, such as the speaker, are sealed. The sealing is sufficient to keep moisture away from the sensitive components within the case. The remote control is sealed to IP66 in the IEC standardized International Protection Code system. All electronic fishing appliances used with the remote control may be manufactured to also fulfil IP66, which ensures the remote control, and connected devices, are further protected from water damage and have an increased life span.

The function of the various buttons varies according to the remote control 100 operational mode however generally the following may be said.

The power button 41 turn has the function of turning the remote control 100 on and off. To avoid accidental use, the power button 41 does not activate when the remote control 100 is in a menu mode.

The menu left button 21 scrolls left through any menu when such scrolling is possible. A single press will also show the last channel that has been activated. Similarly, the menu right button 25 scrolls right through any menu when such scrolling is possible.

The channel select button 22 is commonly used for at least two functions. A quick press changes the active communication channel. A long press ensures the remote control 100 enters a channel mode.

The return button 24 is commonly used for at least two functions. Firstly, it will mute alarms on the remote control 100 and any connected accessories that are configured to be mutable by the remote control 100. When in a menu mode the return button 24 acts as a menu exit.

The torch button 31 is used for to temporarily activate a torch mode in which the strip lights are all active at high power to form a torch.

A long press on the ok button 23 means you enter a hub mode. You can then navigate through menu options using the ok button 23 to select, the return button 24 to go back, the left menu button 21 to scroll the menu to the left and, and the right menu button 25 to scroll the menu to the right. The display 27 ensures the user knows which menu options are available.

Various options are available and various operating parameters can be set, and status interrogated, via the menus on the display. The operating parameters include setting the remote control 100 display backlight colour from a choice of red, green, blue, cyan, yellow, magenta, white and no colour (i.e. off), and setting the volume in the range 0 to 100% in 5% increments with increasingly loud tone to signal the current setting to the user. The remote control 100 can be configured to forget the last volume and start at the lowest value when switched off.

The remote control can be configured to ping all, or a subset of, connected electronic appliance. Dependent on the device, each of the pinged devices may respond with a notification to the remote control or a notification to the user. As an example, a user may select ping on the remote control and then listen to ensure that he can hear the noise emitted by a connected bite detector that he thinks is in audible range. This process simplifies network debugging and communication testing.

Various status messages can be displayed on the display 27 such as battery status, temperature, local time, trip time, and the number, type, and status of connected electronic fishing appliances, which may of course include other remote controls of similar or different design.

When a communication channel has been selected by using the channel select button 22 and navigating to the desired communication channel, various channel specific settings can be specified. These include:
Bite LED Colour (Options: Red, Green, Blue, Cyan, Yellow, Magenta, White, Off);
Night LED Colour (Options: Red, Green, Blue, Cyan, Yellow, Magenta, White, Off);
Tone Setting (Adjustable Range 200Hz tp to 3135Hz);
Volume Setting (0% - 100% in 5% increments);
Roller wheel Sensitivity (Adjustable Range - Roller 1 - Roller 8), adjusting this parameter by remote control enables selecting a sensitivity from 24 levels;
Battery Level (%Value);
Bivvy Light Armed (On / Off);
Radio Signal (%Value);
Night lighte Mode (Mode 1, 2, 3 & 4)
Auto Night Light Level, Swinger off until bite.
Manual Night Light level, Swinger off until bite.
Auto night light level, Swinger follows night light level & colour until bite, then matches Bite LED on bite.
Manual Night Light level, Swinger follows night light level & colour until and colour bite, then matches Bite LED on bite.

Naturally, the above is only a possible configuration of control settings. The remote control 100 can be reprogrammed with alternative menu options and users will be able to configure and customize the remote control 100 and menu options as they see fit. This may involve setting up custom modes that enables many parameters to be set on multiple connected electronic fishing appliances with minimal user input. The user interface of the remote control can therefore be configured as desired. Control features of the user interface, such as the buttons, may be formed from a luminescent material that provides night time illumination of controls without requiring electrical power. In a preferred embodiment, the luminescent material is a phosphorescent material or a persistent luminescence material.

The luminescent material may comprise a thermoplastic and a pigment, such as a green or blue pigment. The luminescent material may be suitable for injection moulding. An example of a suitable luminescent material comprises RONFALIN ®, in particular RONFALIN ® 5005 cobalt.

In some embodiments, the remote control will be differing shapes to improve aesthetics. However, overall the form will remain similar to the form illustrated in figure 2. Similarly, some embodiments accommodate additional buttons and may allow the remote control to stand upright. The additional buttons include, in some embodiments, quick access buttons to facilitate the rapid configuration of key user functions. There may also be additional buttons that are associated with channel specific parameters. In a preferred embodiment, a remote control has six communication channels and each channel has a channel specific button associated.

### Operation

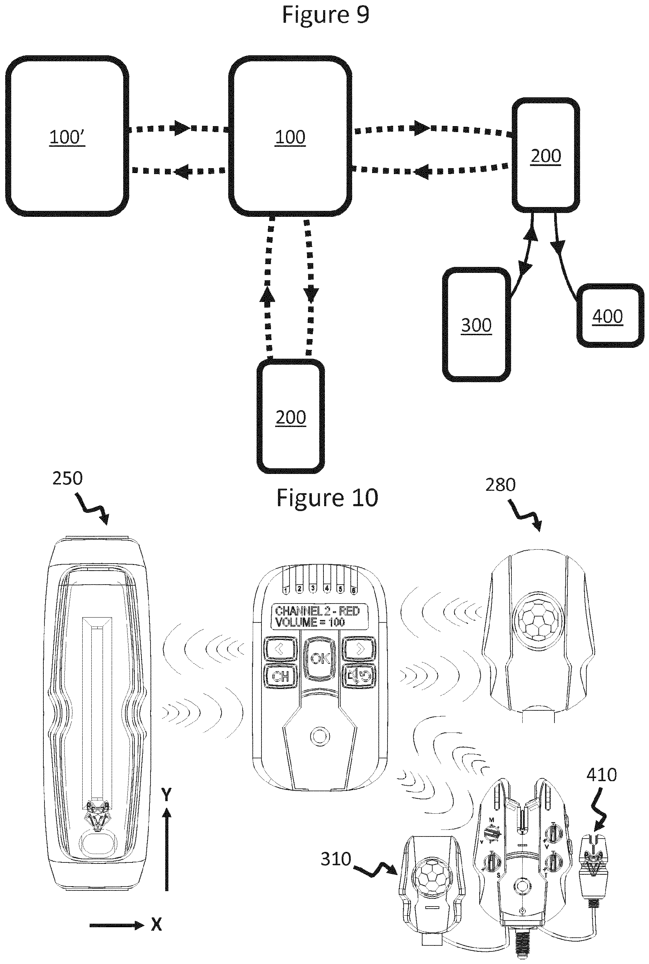

In use, the remote control 100 provides a central hub that establishes a bilateral wireless connection using a wireless transceiver 10 to enable bi-directional communication with at least one electronic fishing appliance 200, such as a bite detector 210. As an example see figure 9, in which wireless communication is indicated by dotted lines, solid lines are used to indicate physical connections, and arrows are used to indicate the flow of information. See also figure 10, in which wireless communication is indicated by radiating wave icons.

The wireless transceiver 10 uses known wireless electronic components, and optionally a whip aerial that conforms to the contours of the outer cover, to maximise the range of the remote control 100. The remote control 100 can connect to multiple electronic fishing appliances 200 such as two bite detectors 210 or two different electronic fishing appliances. The differing electronic fishing appliance 200 may have differing operational capabilities. However, the remote control 100 is configured to be able to recognize the connected appliance and send and receive the appropriate signals. So for example, if two bivvy lights 251 are connected the remote control 100 will not expect status signals indicating motion of a fishing line. The remote control 100 is configured to receive data from all electronic fishing appliances 200 that transmit data and are connected to the remote control 100.

The remote control 100 can also harmonize an operational parameter of all connected electronic fishing appliances 200 that have a relevant adjustable operational parameter. This enables various modes to be formed such as a security mode in which the remote control 100 and any connected electronic fishing appliance 200 form a security system for detecting at least one unauthorized event. If an unauthorized event occurs, such as motion around an area, the remote control 100 can put all or a select number of connected electronic fishing appliances 200 in to an alarm mode. The remote control 100 can also be configured to prevent an alarm mode being stopped unless an appropriate code is entered. The remote control 100 can also serve to silent all alarming electronic fishing appliances or reduce the alarm volume, be they alarming due to alarm mode or otherwise.

Clearly, connecting certain types of electronic fishing appliances will be more beneficial for certain modes. For example a bivvy light 251 and a passive infrared (PIR) sensor 281 will form an effective security system when connected by the remote control 100.

The usefulness of the remote control 100 can be clearly seen by considering bite detectors 210. Bite detectors 210 have many operational parameters, such as:
state of emitted light (colour, flashing frequency, and brightness);
intensity of notification; notification method by which a bite is signalled (vibrating, making a sound, emitting a light, and changing the state of emitted light);
sensitivity;
operational mode; and
any other parameter that is adjustable by a user of the bite detector.

These can all be configured quickly and easily via the remote control 100.

The remote control 100 enables remote control of electronic fishing appliances 200 by transmitting via the wireless transceiver 10 one or more control signals to electronic fishing appliance 200 in wireless communication with the remote control 100. The buttons of the remote control 100 form a user interface 20 to enable the desired control signals to be selected and sent.

A control element 30 in the form of a processor is used to receive inputs from the user interface 20 and to form control signals for controlling electronic fishing appliances 200. Of course, the control element 30 may be configured to enter a controlling mode or a responsive semi-automatic state. In other words, the control element 30 once configured by the user interface 20 may issue control signals without further input. For example, the remote control 100 could be configured to flash a bivvy light if a bite is detected on a bite detector 210, and then several hours after the remote control user interface 20 was adjusted a bite may be detected at the bite detector 210, which would transmit the bite status to the remote control 100, which would respond by transmitting the operational parameters to the bivvy light to make the bivvy light flash. Therefore, the control element 30 is not limited to responding only to inputs from the user interface 20.

The display 27 of the remote control 100, the six strip lights 28, and the speaker 26 form a versatile notification element 40. The notification element 40 being adapted to receive via the wireless transceiver 10 a status signal from the at least one electronic fishing appliance 200 in wireless communication with the remote control 100. The status signal being indicative of an operating status of the electronic fishing appliance 200, and the notification element 40 being further adapted to alert a user of the status. One exemplary status would indicate a bite detected on a bite detector. Of course, the status signal may also be merely indicative of a remote control 100, or other connected electronic fishing appliance 200, operation parameter. When multiple electronic fishing appliances 200 are connected the status signal will includes an indication as to which electronic fishing appliances the status came from. For example a bite detected on communication channel 2 will make the 2nd strip light flash. The remote control 100 may perform signal processing and may send signals based on the output of the signal processing. Herein, the result of the signal processing is also considered as a status or detected event. For example, the remote control 100 can be configured to turn on a bivvy light 251 when a bite detector 210 detects three bite events within a certain time period. This provides an effective way of alerting a user but avoids the user being needlessly alerted to false bites, which are line motions that trigger the bite detector but are not due to a fish contacting the fishing line that is coupled to the bite detector 210.

Many electronic fishing appliances can be controlled through the remote control 100 including:
bite detectors 210;
PIR detectors 281;
light, such as a bivvy light 251;
a battery pack;
a float, such as an illuminated float;
a weighing scale; and
any electronic fishing appliance 200 configured to communicate with the remote control 100.

The remote control 100 can also be configured to communicate with other remote controls 100' of similar of different design. The other remote control 100' may then enable the relaying of communications and thereby increase the range of the wireless communication network that is formed.

Additionally, the remote control 100 can be configured to enable calling or messaging of one or more other remote controls 100'.

### Network

Whilst, several network establishing and maintenance protocols are possible with the remote control 100. The remote control 100 is normally configured to automatically form the network by linking with electronic fishing appliances as they appear within a range of the remote control 100. However, the electronic fishing appliances 200 generally have to undergo a pairing procedure beforehand to ensure that only desired electronic fishing appliances 200 enter into communications with the remote control 100. To improve the security of the network and minimize cross talk communications between the paired electronic fishing appliances and the remote control 100 are encrypted.

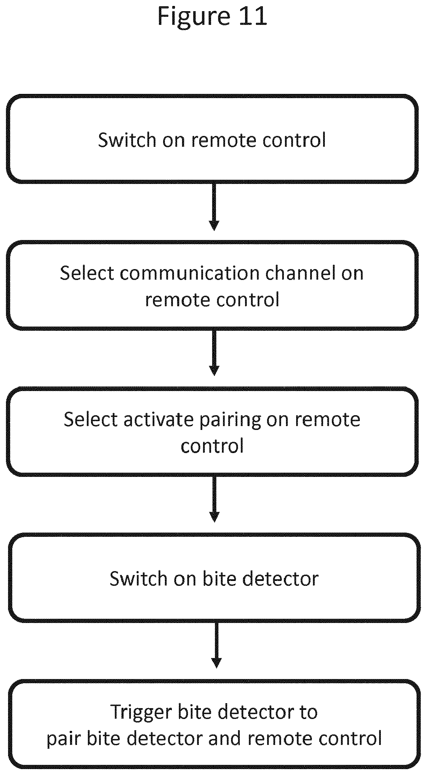

As shown on figure 11, the pairing process to pair an electronic fishing appliance to a remote control 100 comprises the following steps: bringing the electronic fishing appliance into the range of the wireless communication of the remote control 100; switching on the remote control; entering the channel menu on the remote control 100 and selecting a communication channel to pair; selecting activate pairing on the remote control 100; switching on the electronic fishing appliance; and triggering the electronic fishing appliance. Triggering can comprise pressing the mode button on the bite detector. The bite detector and the remote control 100 are then paired.

As shown on figures 9 and 10, the remote control 100 is configured to communicate with an ancillary fishing accessory 300 that is coupled to an electronic fishing appliance 200, such as a bite detector 210, through a port 208. The ancillary fishing accessory is then effectively the same a separate electronic fishing appliance 200 that is controlled by the 100.

The remote control 100 is configured to control the ancillary fishing accessory 300 via the port, and to acquire data from the ancillary fishing accessory 300 via the port 208. The port is a physical connection comprising four electrical connectors and has the form of a 3.5 mm jack. The port is configured to recognize the ancillary fishing accessory 300 that is connected. The coupled ancillary fishing accessory 300 can then be control in a similar manner to the electronic fishing appliances 200 that are directly wirelessly connected to the remote control 100.

### Bite detector

An exemplary electronic fishing appliance for the remote control to communicate with is a bite detector 210. A bite detector is an electronic fishing appliance 200 with a passageway 231 through a casing that serves to let fishing line run over a roller wheel. The motion of the roller wheel due to the passing fishing line is detected by various motion sensors. If the signals from these sensors pass exceed set thresholds, the bite detector is triggered and the user is alerted, normally by a sound or a flashing light. The particular bite detector that is disclosed uses two motion sensors, one a vibration sensor and the other a roller wheel rotation sensor.

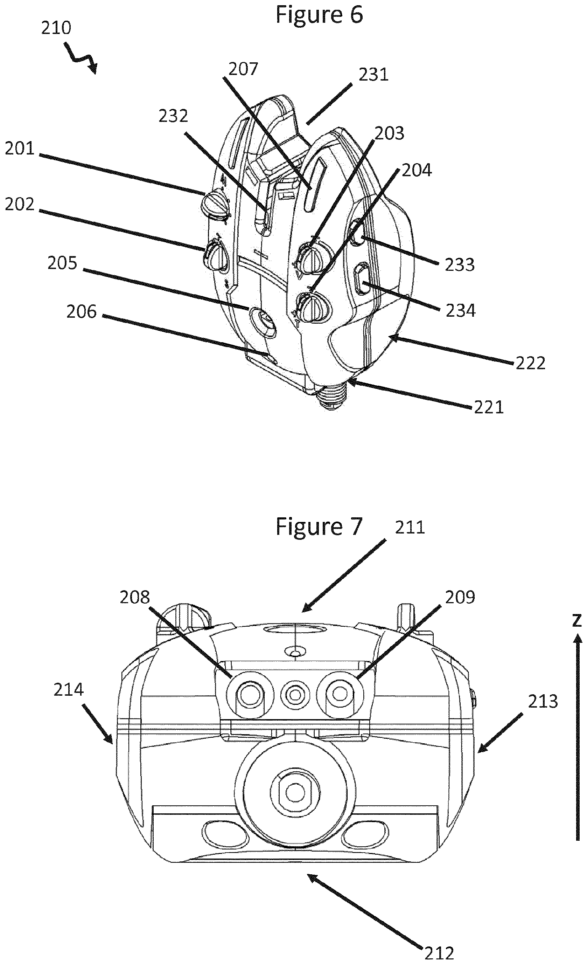

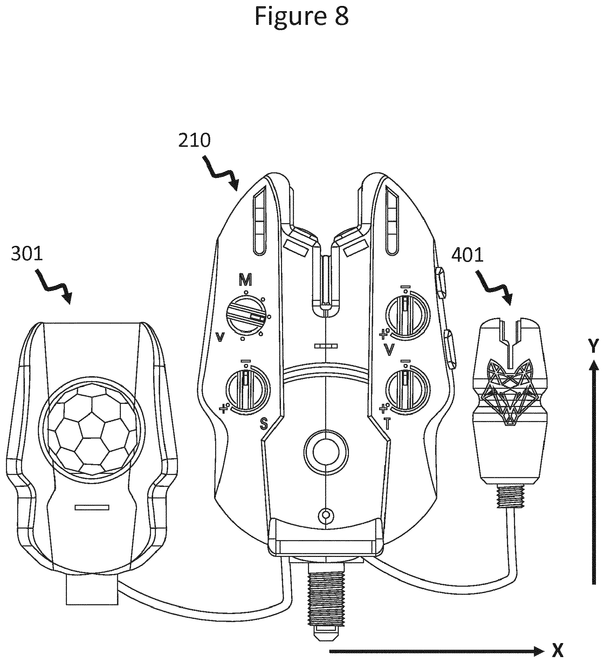

An bite detector 210 will now be described by reference to figures 6 to 8, the bite detector 210 is an electronic fishing appliance 200 with a case defined by two pieces, a front half 221 and a back half 222, that come together to form a roughly spheroidal shape, with flattened front and back faces, and a channel at the top providing the passageway 231 from the front to the back for a fishing line. To describe the case of the bite detector four faces are defined: a front face 211, a back face 212, a left face 213, and a right face 214. The case will be described as if it is sitting vertically upstanding resting on its bottom most feature with the front face facing a user (as illustrated in figure 8). The left to right direction is indicated in figure 8 by the arrow marked X. The bottom to top direction is indicated in figure 8 by the arrow marked Y. The front to back direction is orthogonal to the X and Y directions and is indicated in figure 7 by the marrow marked Z.

Each face comprises a surface that has been filleted, curved, and/or shaped to improve its ergonomics, meaning a user can comfortably use it even with gloved hands. The surfaces are generally not distinct but instead transition smoothly between adjacent faces.

The front face 211 which is formed on the front half 221 has four cavities each of which receives a knob. The four knobs are the mode knob 201, sensitivity knob 202, volume knob 203, and tone knob 204. The knobs are arranged in a two by two formation with the mode knob 201 and sensitivity knob 202 located on the left side of the bite detector 210, and the volume knob 203 and tone knob 204 on the right hand side of the bite detector 210. The knobs are sufficiently offset from the centre line to avoid interference with any fishing line passing through the passageway 231. The mode knob 201 and volume knob 203 are located above and in line with the sensitivity knob 202 and tone knob 204 respectively.

The back face 212 comprises a light sensor to enables the bite detector to monitor an ambient light level and adapt its illumination accordingly. If so configured, the remote control 100 will adapt the illumination of the display and/or other illuminated features taking the measured ambient light level in to account. Connected electronic fishing appliances may also be issued operational parameters that adjust their illuminated features taking the measured ambient light level in to account.

The knobs are shaped to enable easy manipulation. The particular shape is approximately half dome that has two parallel offset cuts to form a central curved ridge that can be easily grasped between two fingers. The knob can be made of any suitable material such as plastic.

All knobs can be rotated to change operational parameters of the bite detector 210. The mode knob is biased so that it snaps to one of 6 positions. The other three knobs can be rotated to any position within predefined limits of rotation. The front half of the case 221 and the individual knobs are marked with white paint to assist the user in rotating the knobs to the appropriate position.

The case and all knobs and button and features, such as the speakers, are sealed. The sealing is sufficient to keep moisture away from the sensitive components, and the bite detector is sealed to IP66 in the IEC standardized International Protection Code system.

The knobs and/or buttons may be formed from a luminescent material that provides night time illumination of controls without requiring electrical power. In a preferred embodiment, the luminescent material is a phosphorescent material or a persistent luminescence material.

The luminescent material may comprise a thermoplastic with a pigment, such as a green or blue pigment. The luminescent material may be suitable for injection moulding. An example of a suitable luminescent material comprises RONFALIN ®, in particular RONFALIN ® 5005 cobalt.

In the standard menu mode, the mode knob 201 has six settings, which are vibration, and eight lengths ranging from 2 to 100 mm. When controlled by the remote control the number of lengths available is increased to 24. In some configurations, the lengths may include values over 100 mm. The lengths relate to the roller wheel sensitivity, in other words the distance the roller wheel must rotate in a set time to trigger a bite event. This is how the roller wheel sensitivity is set manually on the bite detector.

In the standard menu mode, the sensitivity knob 202 adjusts the vibration sensitivity.

In the standard menu mode, the volume knob 203 adjusts the volume of the bite detector from silent (0 db) to approximately 100 db.

In the standard menu mode, the tone knob 204 adjusts the emitted tone from high to low.

At the top of the front face 211 there is two translucent strips 207 that are each configured to be illuminated by illumination means located inside the case. Each of the translucent strips 207 can be individually addressable and any desired lighting pattern can therefore be created.

In the left right centre of the front face, approximately a third of the height of the bite detector is a speaker 205 for alerting the user. The speaker 205 can produce whatever sounds are required according to the operation mode, detected event, or operational parameter of the bite detector.

In the left right centre of the front face, below the speaker 205 is a central LED 206. The LED 206 can change the state of emitted light according to the operation mode, detected event, or operational parameter of the bite detector 210. The central LED 206 is also called a night light. Depending on the configuration of the bite detector 210, the central LED 206 and translucent strips may be configured to have the same state of emitted light when active, or they may be configured to have different states of emitted light when active. Both night light 206 and strip lights may be configured separately to change the state of light they emit in response to particular stimulus.

The passage way 231 comprising a wide groove and at the base of the wide groove a narrow groove containing the roller wheel.

On the right face 213 of the bite detector 210 are two buttons, which are the mode button 233 and the mute button 234. Each of the two buttons are received in cavities in the front half 221 of the case. The buttons are formed out of any suitable material such as plastic or rubber. The button are formed as rounded rectangles shapes, with the long axis of each being aligned. The depth of each button, in other word the short axis of the rectangle shapes, are the same. The mode button is situated above the mute button. The mode button 233 is approximately 75% the size of the mute button. The mode button 233 is situated at a height just above the height of the volume knob 203. The mute button 234 is situated at a height in-between the height of the volume knob 203 and the tone knob 204.

A long press on the mode button 233 followed by moving the mode knob 201 into one of several predetermined positions moves into specific menu modes, such as bite LED colour selection mode or night light LED colour selection. In the specific menu modes, the tone button 234 can be used to change operational parameters, and pressing the mode button again 233 exits the specific menu mode.

Similarly, a long press on the mode button 233 followed by moving the mode knob 201 into one of several different predetermined positions configures the bite detector 210 to a specific status indicating mode that indicates a status of the bite detector. Again, pressing the mode button 233 again exits this specific status indicating mode. As example, entering a battery level mode means the LED colour of the bite detector reflects the battery status.

On the bottom of the bite detector there are two ports, which are the universal port 208 and the wired accessory port 209. The universal port 208 is known as the IQ Port 208. The ports are located in an extended edge of the front half of the case and are received in two cavities. The universal port 208 provides a socket for a 3.5 mm jack plug with 4 contacts providing 2 communication channels.

The wired accessory port 209 is a 2.5 mm socket suitable for powering an illuminated ancillary fishing accessory 400, such as the multicolour fishing hangar 410 as seen in figure 10. The wired accessory port 209 is configured to be backwardly compatible with standard ancillary fishing accessory 400. Some multicolour fishing hangers 410 that are connected to the wired accessory port 209 are configured to adapt the state of emitted light according to the operational parameters of the bite detector 210. Such multicolour fishing hangers 410 can therefore serve to act as a secondary notification system by variation of the state of their emitted light. Since the bite detector 210 is configured to connect to the remote control 100 when such multicolour fishing hangers 410 are connected to the wired accessory point 209 the multicolour fishing hangers 410 may reflect an operational parameter or status of any electronic fishing appliance 200 that is in communication with the remote control 100. The term fishin hanger is the generic term to cover any illuminate ancillary fishing accessory 400 that realisably couples to the line.

The universal port 208 serves as a connection to enable electronic fishing appliances without wireless networking ability, or with damaged networking ability, to connect to the network provided by the remote control 200. The universal port 208 can send control signals to connected electronic fishing appliances and receive data from connected electronic fishing appliances if the connected electronic fishing appliances have such functionality. The universal port 208 assesses the electrical properties of connected electronic fishing appliances, such as the resistance between connections or sensed voltages, to ascertain the type of electronic fishing appliances that is connected. A database of known electronic fishing appliances is then searched to find the operational parameters appropriate for an electronic fishing appliance of the ascertained type. The universal port 208 is then configured to ensure that the appropriate voltages and/or currents are supplied or monitored so as not to damage the connected electronic fishing appliance and ensure it is appropriately monitored to avoid loss of data. The universal port 208 is protected against incorrect insertion and short circuit.

The bite detector 210 therefore automatically interfaces with connected ancillary fishing accessories. The user does not therefore have to adapt the bite detector 210, such as by installing drivers or performing a configuration process when an ancillary fishing accessory is connected to the universal port 208. Appropriate operational parameters stored on the bite detector 210 or transmitted from the remote control 100 will be automatically transferred to the connected electronic fishing appliance once said electronic fishing appliance is connected to the universal port 208.

### PIR sensors

Another type of electronic fishing appliance that may be control by the remote control 100 is a PIR sensor.

The PIR sensor will now be described by reference to figures 8 and 10. As seen from figure 10, there are two forms of PIR sensor. A first form of PIR sensor 280, as also shown in figure 8, is a wireless PIR sensor configured to directly wirelessly couple to the remote detector. The case has a form that roughly rounded square form with flared sides that are pinched together in a wait at the bottom end. The case is shaped to enable the PIR sensor 280 to be easily manipulated and orientated.

The front face of the casing has a cavity that receives a hemispherical window, formed as half a geodesic dome that is partially transparent to infra-red signals. An electronic PIR sensor 280 is located behind and with the geodesic dome. The electronic PIR sensor detects motion in the manner that is known to those skilled in the arts. The detected signals are then processed and communicated back to a remote control 100 or other electronic fishing appliances in connection with the wireless PIR sensor 280.

The remote control 100 or other electronic fishing appliances 200 need not be final destination of the status events but they will propagate through the network. The main remote control 100 of the network will therefore receive signals about the triggering of the wireless PIR sensor 280. As with all connected electronic fishing appliance the operational parameters of the wireless PIR sensor 280 can be controlled by the remote control 100.

A second form of PIR sensor is the wired PIR sensor 310 shown in figure 12. It will be noted that the wired PIR sensor 310 is not in direct wireless communication with the remote control 100. It is however, physically coupled to the bite detector through the universal port 208 on the bite detector 210. Therefore, the wired PIR sensor 310 operational parameters will be controllable via the bite detector, and status events can be transmitted through the bite detector 210. Therefore, due to the universal port 208, for most applications, the wired PIR sensor 310 can be considered to be connected to the network equivalently do the wireless PIR sensor 280.

The PIR sensors are particularly useful when it comes to forming a security system as they are very effective at detecting unauthorized presence. Both sensors have a multicolour LED. If connected, the state, such as colour, of the LED is transmitted to the remote control 100. The controller can change the state of the LED as required.

### Bivvy light

A bivvy light, which can be controlled be the remote control 100, will now be described by reference to figure 10. A bivvy light is a light for illuminating a bivvy, which is a small tent. The bivvy light 250 as shown in figure 10 can communicate with the remote control 100, which can serve to turn the bivvy light 250 on or off, or adjust the state of the light that is emitted.

The bivvy light is substantially cylindrical and approximately 20 cm long. The top to bottom direction of the bivvy light is indicated by arrow X in figure 10. The left to right direction is indicated in figure 10 by the arrow marked X. The bottom to top direction is indicated in figure 10 by the arrow marked Y. The front to back direction is orthogonal to the X and Y directions and is not shown.

The case has a cavity to receive a translucent window, which serves to emit diffuse light when illuminated by a high output light emitting element inside the case. The window is symmetric about its centre in the Y direction and has a narrow waist at the centre. An image is also marked on the window. The image may be projected by the light emitting element inside the case and may be located on a flat portion of the window to improve the quality of the projection. One end of the bivvy light has a button to turn the bivvy light 250 on and off. The other end has a button to change the operational mode and has a multicolour LED to indicate the selected mode.

In some embodiments, the bivvy light 250 has a PIR sensor and, in some embodiments, the bivvy light 250 has a manual on off switch. Therefore, the remote control 100 may not be required to operate the light. However, the remote control 100 enables the status of other electronic fishing appliances to be efficiently signalled via the bivvy light, which is a strong light that is very effective for drawing the attention of a user. At approximately the middle of the window at the waist are two sets of multicolour LEDS which can be used to further notify the user to a particular status. For example, the LEDS may turn green to alert the user that a bite has been detected on a green illuminated bite detector.

A remote control 100 can coordinate the operation of the bivvy light and use the bivvy light as an additional means of alerting the user to detected status events.

### Adaptable multicolour fishing hanger

A fishing hanger that can connect to the remote control 100 via the wired accessory port 209 of the bite detector will now be described by reference to figure 10. The fishing hanger 410 is a multicolour fishing hanger. The fishing hanger 410 has a cylindrically symmetric body with a passageway at a first end.

The passageway runs orthogonally to the axis of cylindrical symmetry of the body. The passageway comprises a main groove with a narrow groove extending from the base of the main groove. The fishing hanger is designed to couple to a fishing line, and one such way of coupling is by pressing a fishing line into the narrow groove. Once pressed in place the hanger is frictionally retained on the fishing line.

The body is partially translucent and can be illuminated by a light emitting element located within the body. The light emitting element is a multiple colour LED, which is formed by a combination of LEDs of different colours. The state of the emitted light and whether or not the light is activated is controlled by electrical signals transmitted from a cable that enters the body of the body at the second end, which is the end at the opposite end to the passage way.

Variation of the state of the light that can be effected from the remote control 100 include changes in the colour of the emitted light; the intensity of the emitted light; the flashing frequency of the emitted light; the duty cycle of the emitted light; the modulation of the emitted light; and combinations thereof.

The body is formed and treated so that it an image is visible and the remaining light is diffused throughout the body. A narrow waist is also formed approximately equidistant from the first and second ends.

When the fishing hanger 410 is connected to bite detector 210, the bite detector 210 controls the state of the emitted light and whether or not the light is activated. When the bite detector 210 is coupled to a remote control 100 the bite detector 210 can be controlled by the remote control 100. Therefore, a user can control the hanger 410 from either the bite detector 210 or the remote control 100.

Controlling the fishing hanger 410 includes configuring the state of the emitted light and whether or not the light is activated. The bite detector 210 or remote control 100 may also be configured to change the state of the light emitted in response to a stimulus such status signals from a bite detector, which may or may not be the coupled bite detector 210.

For example, the remote control 100 might configure a bite detector 210 to turn blue. A fishing hanger 410 connected to a blue light emitting bite detector 210 will go blue to harmonize with the bite detector 210. The remote control 100 can then configure the fishing hanger 410 to turn red when a bite is detected on the bite detector 210.

The bite detector 210 and fishing hanger 410 can also be set into a security mode. In this mode, the lights will flash and speakers will sound should an unauthorized event be detected. A unauthorized event includes uncoupling or moving of all electronic components forming the security system.

The fishing hanger 410 can be configured via the bite detector 210 or remote control 100 to set four night modes, which are:
1- fishing hanger illumination off until a bite is detected at which point the hanger illuminates at a automatically determined level.
2- fishing hanger illumination off until a bite is detected at which point the hanger illuminates at a manually set level.
3- fishing hanger illumination is set to automatically follows bite detector night light level & colour until a bite is detected at which point it matches bite notification parameters (level & colour) of the bite detector.
4- fishing hanger illumination is set at a manually set levels until a bite is detected at which point it matches bite notification parameters (level & colour) of the bite detector.

The wired accessory port 209 is a 2.5 mm jack connection. Therefore, existing single colour fishing hangers can be powered by the bite detector 210 wired accessory port 209. In this case, the colour of the single colour fishing hanger is not adjustable.

The body of the fishing hangar 410 also has a screw thread to enable additional weights to be added.

The features disclosed in relation to particular aspects are not limited as such and further embodiments may therefore be formed from a combination of any of the disclosed features.

In particular, the modular aspect of the network formed by the remote control 100 can easily be extended to include any number of electronic fishing appliances provided they are configured to communicate with the remote control 100 either directly via wireless communication or indirectly through physical coupling to an electronic fishing appliance in wireless communication with the remote control 100. The capabilities of the networked system formed by the remote control 100 are therefore limited only by the combined abilities of the connected electronic fishing appliances. Therefore, additional devices may add new functionality.

The following is a list of aspects of the disclosure and is part of the description.
1. A remote control for communicating with at least one electronic fishing appliance, the remote control comprising:
   a wireless transceiver adapted to communicate bi-directionally with the at least one electronic fishing appliance;
   a user interface;
   a control element adapted to transmit via the wireless transceiver at least one control signal to the at least one electronic fishing appliance for controlling its operation in response to a user interacting with the user interface; and
   a notification element adapted to receive via the wireless transceiver a status signal from the at least one electronic fishing appliance, the status signal being indicative of an operating status of the electronic fishing appliance, and the notification element being further adapted to alert a user of the status.
2. The remote controller of aspect 1, wherein the at least one electronic fishing appliance comprises a bite detector.
3. The remote controller of aspect 1 or 2, wherein the status is a bite detected on a bite detector.
4. The remote controller of any preceding aspect, wherein the at least one electronic fishing appliance comprises two bite detectors and wherein the notification system includes an indication as to which bite detector detected the bite.
5. The remote controller of any preceding aspect, wherein the remote control is configured to adjust at least one of the following bite detector operational parameters:
   state of emitted light;
   intensity of notification;
   notification method by which a bite is signalled;
   sensitivity;
   operational mode; and
   any other parameter that is adjustable by a user of the bite detector.
6. The remote controller of any preceding aspect, wherein the at least one electronic fishing appliance comprises a first electronic fishing appliance and a second electronic fishing appliance.
7. The remote controller of aspect 6, wherein the first electronic fishing appliance is of different type to the second electronic fishing appliance.
8. The remote controller of aspect 6 or 7, wherein the first electronic fishing appliance has different operational parameters to the second electronic fishing appliance.
9. The remote controller of any preceding aspect, wherein the remote control is configured to receive data from all of the at least one electronic fishing appliances that transmit data that are connected to the remote control.
10. The remote controller of any preceding aspect, wherein the remote control is configured to put at least one electronic fishing appliance in an alarm mode when a user selects alarm mode.
11. The remote controller of any preceding aspect, wherein the remote control is configured to put all connected electronic fishing appliances that have an alarm mode in to an alarm mode when a user selects an alarm mode.
12. The remote controller of any preceding aspect, wherein the remote control and any connected electronic fishing appliance in an alarm mode form a security system for detecting at least one unauthorized event.
13. The remote controller of aspect 12, wherein when the security system detects an unauthorized event, all connected electronic fishing appliances are sent an alert signal.
14. The remote controller of aspect 13, wherein the alert signal sets at least one electronic fishing appliance in to an alert mode.
15. The remote controller of any preceding aspect, wherein the remote control is configured to harmonize an operational parameter of all connected electronic fishing appliances that have a relevant adjustable operational parameter.
16. The remote controller of any preceding aspect, wherein the remote control is configured to put at least one electronic fishing appliance in to a low volume state when a user selects a low volume mode.
17. The remote controller of any preceding aspect, wherein the remote control is configured to put all connected electronic fishing appliances that have a low volume mode in to a low volume mode when a user selects to a low volume mode.
18. The remote controller of aspect 16 or 17, wherein the low volume is a silent mode.
19. The remote controller of any preceding aspect, wherein the at least one electronic fishing appliance comprises at least one item from the list of:
   a bite detector;
   a PIR detector;
   a light;
   a battery pack
   a float;
   a weighing scale; and
   any electronic appliance configured to communicate with the remote control.
20. The remote controller of any preceding aspect, wherein the at least one electronic fishing appliance includes at least one light and at least one bite detector.
21. The remote controller of any preceding aspect, wherein the at least one electronic fishing appliance comprises another remote control.
22. The remote controller of any preceding aspect, wherein the remote control is configured to relay communications from another remote control.
23. The remote controller of aspect 22, wherein the another remote control comprises the features of the remote control.
24. The remote controller of any preceding aspect, wherein the remote control is configured to form a communication network.
25. The remote controller of any preceding aspect, wherein forming a communication network comprises attempting to communicate with a number of electronic fishing appliances.
26. The remote controller of any preceding aspect, wherein forming a communication network comprises linking with electronic fishing appliances as they appear within a range of the remote control.
27. The remote controller of any preceding aspect, wherein forming a communication network comprises linking with electronic fishing appliances using a pairing procedure.
28. The remote controller of any preceding aspect, wherein forming a communication network comprises ascertaining the number of electronic fishing appliances that are within a range of the remote control.
29. The remote controller of any preceding aspect, wherein forming a communication network comprises forming a communication network by repeatedly attempting to communicate with a number of electronic fishing appliances.
30. The remote controller of any preceding aspect, wherein forming a communication network comprises unlinking any electronic fishing appliance that leaves the network.
31. The remote controller of any preceding aspect, wherein forming a communication network comprises unlinking any electronic fishing appliance using an unpaired procedure.
32. The remote controller of any preceding aspect, wherein the remote control has several communication channels.
33. The remote controller of any preceding aspect, wherein each communication channel is associated with one electronic fishing appliance.
34. The remote controller of any preceding aspect, wherein the remote control is configured to enable calling or messaging of one or more other remote controls.
35. The remote controller of any preceding aspect, wherein at least some of the signals are encrypted.
36. The remote controller of any preceding aspect, wherein the remote control comprises an alpha numeric display.
37. The remote controller of any preceding aspect, wherein the remote control comprises a torch.
38. The remote controller of any preceding aspect, wherein the remote control is configured to be at least one of sealed, buoyant, and self-uprighting when floating in water.
39. The remote controller of any preceding aspect, wherein the remote control comprises a body comprising molded cells.
40. The remote controller of aspect 39 wherein the molded cells define nested compartments
41. The remote controller of aspect 39 or 40, wherein the molded cells cooperate to prevent ingress of water or detritus into body.
42. The remote controller of any preceding aspect, wherein the user interface comprises a push button.
43. The remote controller of any preceding aspect, wherein the notification system is configured to display a status by emitting a light, generating a noise, or vibrating.
44. The remote controller of any preceding aspect, wherein the notification system is configured to display a status of multiple electronic fishing appliance in communication with the remote control.
45. The remote controller of any preceding aspect, wherein the notification system illumination is automatically adjusted according to the local environment or current time.
46. The remote controller of any preceding aspect, wherein the remote control comprises a contoured body and a whip aerial that conforms to the contours of the body.
47. The remote controller of any preceding aspect, wherein the remote control is configured to communicate with at least one ancillary fishing accessory that is coupled to one of the at least one electronic fishing appliance through a port.
48. The remote controller of any preceding aspect, wherein the remote control is configured to communicate with at least one ancillary fishing accessory that is coupled to the remote control through a port.
49. The remote controller of aspect 47 or 48, wherein the remote control is configured to control the at least one ancillary fishing accessory via the port.
50. The remote controller of any of aspect 47 to 49, wherein the remote control is configured to acquire data from the at least one ancillary fishing accessory via the port.
51. The remote controller of any of aspect 47 to 50, wherein the port comprises a physical coupling.
52. The remote controller of aspect 51, wherein the physical coupling comprises two electrical connections.
53. The remote controller of aspect 51, wherein the physical coupling comprises four electrical connections.
54. The remote controller of any of aspects 51 to 53, wherein the physical coupling comprises connections to two communication channels.
55. The remote controller of any of aspect 51 to 54, wherein the physical coupling is a 2.5 mm jack.
56. The remote controller of any of aspects 47 to 55, wherein the port is configured to recognize an ancillary fishing accessory that is connected.
57. The remote controller of any of aspects 47 to 56, wherein the port is configured to send appropriate control signals to a recognized connected ancillary fishing accessory.
58. The remote control of any preceding aspect, wherein the remote control is configured to connect to an existing network.
59. The remote control of aspect 58, wherein the existing network is an existing mobile telephone network.
60. The remote control of aspect 59, wherein the remote control is configured to enable data transfer voice and text message messaging over the existing mobile telephone network.
61. The remote control of any preceding aspect, wherein the remote control is configured to connect to a mobile phone and to be controlled by the mobile phone.
62. A computer-readable medium, comprising executable instructions, for installation on a mobile phone, for controlling the remote control of aspect 61.
63. An electronic fishing appliance configured to operate with the remote control of any preceding aspect.
64. At least one of:
   a bite detector;
   a PIR detector;
   a light;
   a battery pack;
   a float;
   a thermometer; and
   a weighing scale;
   configured to communicate with the remote control of any of aspect 1 to 62.
65. An ancillary fishing accessory configured to communicate with the remote control of any of aspects 44 to 60 via the port.
66. A kit comprising the remote control of any of aspects 1 to 62 and at least one electronic appliance.

The present invention is defined only by the appended claims.

## Claims

1. A remote control for communicating with at least one electronic fishing appliance, the remote control comprising:
a wireless transceiver adapted to communicate bi-directionally with the at least one electronic fishing appliance;
a user interface;
a control element adapted to transmit via the wireless transceiver at least one control signal to the at least one electronic fishing appliance for controlling its operation in response to a user interacting with the user interface; and
a notification element adapted to receive via the wireless transceiver a status signal from the at least one electronic fishing appliance, the status signal being indicative of an operating status of the electronic fishing appliance, and the notification element being further adapted to alert a user of the status.

2. The remote controller of claim 1, wherein the at least one electronic fishing appliance comprises a bite detector.

3. The remote controller of any preceding claim, wherein the status is a bite detected on a bite detector and wherein the at least one electronic fishing appliance comprises two bite detectors and wherein the notification system includes an indication as to which bite detector detected a bite.

4. The remote controller of any preceding claim, wherein the remote control and any connected electronic fishing appliance in an alarm mode form a security system for detecting at least one unauthorized event.

5. The remote controller of any preceding claim, wherein the remote control is configured to put at least one electronic fishing appliance in to a low volume state when a user selects a low volume mode.

6. The remote controller of any preceding claim, wherein the at least one electronic fishing appliance comprises at least one item from the list of:
a bite detector;
a PIR detector;
a light;
a battery pack a float;
a weighing scale; and
any electronic appliance configured to communicate with the remote control.

7. The remote controller of any preceding claim, wherein the at least one electronic fishing appliance includes at least one light and at least one bite detector.

8. The remote controller of any preceding claim, wherein the at least one electronic fishing appliance comprises another remote control.

9. The remote controller of any preceding claim, wherein the remote control is configured to form a communication network, wherein forming a communication network comprises linking with electronic fishing appliances using a pairing procedure.

10. The remote controller of any preceding claim, wherein the remote control has several communication channels, wherein each communication channel is associated with one electronic fishing appliance.

11. The remote controller of any preceding claim, wherein the remote control is configured to enable calling or messaging of one or more other remote controls.

12. The remote controller of any preceding claim, wherein the notification system is configured to display a status of multiple electronic fishing appliance in communication with the remote control.

13. The remote controller of any preceding claim, wherein the remote control comprises a contoured body and a whip aerial that conforms to the contours of the body.

14. The remote controller of any preceding claim, wherein the remote control is configured to communicate with at least one ancillary fishing accessory that is coupled to one of the at least one electronic fishing appliance through a port.

15. The remote controller of claim 14, wherein the port comprises a physical coupling, wherein the port is configured to recognize an ancillary fishing accessory that is connected, wherein the port is configured to send appropriate control signals to a recognized connected ancillary fishing accessory.
